**Europäisches Patentamt**

(19) **European Patent Office**

**Office européen des brevets**

(11) **EP 0 547 017 B1**

(12) **EUROPEAN PATENT SPECIFICATION**

(45) Date of publication and mention
of the grant of the patent:
**03.07.1996 Bulletin 1996/27**

(51) Int. Cl.⁶: **B29C 47/94**

(21) Application number: **92870193.7**

(22) Date of filing: **02.12.1992**

(54) **Process and device for applying a layer of lubricant on the inner surface of a plastic duct**

Verfahren und Vorrichtung zur Beschichtung der Innenfläche eines Kunststoffrohres mit Gleitmittel

Procédé et dispositif pour l'application d'une couche de lubrifiant sur la surface intérieure d'un tuyau en matière plastique

(84) Designated Contracting States:
**DE FR GB IE IT NL**

(30) Priority: **04.12.1991 BE 9101112**

(43) Date of publication of application:
**16.06.1993 Bulletin 1993/24**

(73) Proprietor: **Kabelwerk Eupen AG**
**Câblerie d'Eupen SA**
**Kabelfabriek Eupen NV**
**B-4700 Eupen (BE)**

(72) Inventor: **Pelzer, Rudolf**
**W-5120 Herzogenrath (DE)**

(74) Representative: **Overath, Philippe et al**
**Cabinet Bede,**
**Place de l'Alma, 3**
**1200 Bruxelles (BE)**

(56) References cited:
CH-A- 658 321         DE-A- 2 023 942
DE-A- 2 357 078       GB-A-  659 480
GB-A- 2 082 112       US-A- 2 491 152
US-A- 4 892 442

• PATENT ABSTRACTS OF JAPAN vol. 9, no. 158 (M-393)(1881) 3 July 1985 & JP-A-60 032 627 (FURUKAWA DENKI KOGYO K.K.) 19 February 1985
• PATENT ABSTRACTS OF JAPAN vol. 13, no. 591 (M-913)(3939) 26 December 1989 & JP-A-12 49 321 (ASAHI CHEM IND CO LTD) 4 October 1989

## Description

This invention concerns a process and a device for applying a layer of lubricant on the inside surface of an extruded plastic pipe, whereby the layer has a uniform thickness and is uniformly distributed on the entire circumference of said inner surface.

In order to insert optical fibres in particular into long pipes, tubes, ducts or conduits which have already been laid in the ground, it is necessary for the inside surface of the pipe to have an even, thin coating of an efficient, liquid lubricant. The lubricant film thus formed considerably reduces the frictional forces between the cable being inserted and the inside wall of the duct.

The present known methods for coating the inner surface of cable ducts with lubricant are unsatisfactory. The most simple method consists of pouring a few litres of lubricant into one end of the duct at the installation site when it has already been laid in the ground, and then spreading it over the walls of the duct by means of compressed air or by means of a piston with packing ring driven by compressed air. However, this is a rough method, since the lubricant is spread unevenly over the inside of the duct. According to another method, a porous, sausage-shaped skin filled with lubricant is pulled through the duct. As it is pulled along, lubricant flows out of the pores. In this case also the distribution is very uneven and there is too much lubricant in the beginning when the sausage is introduced in the duct and too little at the end of the duct.

Lubricated cable ducts are therefore supplied at the site, in order to avoid the awkward process of having to manipulate the lubricant on site. However, the same process of using a piston to distribute the lubricant is often used (a piston with a packing ring is blown through the duct when it is wound on a drum, and the lubricant which has previously been poured in is similarly distributed unevenly and not in a reproducible way).

Another method used is the spray injection method, in which the lubricant is applied in precisely controlled amounts by means of a spray jet inserted into an offset extrusion head, so that it is finely sprayed onto the hot, plastic inner surface of the cable duct immediately as the latter emerges from the injection moulder. This inline coating method works in a very precise and reproducible way, i.e. the ducts extruded and coated in this way have a fine, even coating of lubricant around their inner circumference over their entire length. This method, while it is technically perfect, nevertheless has three disadvantages in practice:

1) cable ducts with small internal diameters (< 25 mm) cannot be coated with this method, because the spray injector cannot be made small enough.
2) cable ducts which have a relatively thick plastic cord or band inside cannot be coated by the spray method described above.
3) very long cable ducts (> 1000 m) cannot be coated inside with lubricant by the spray jet or injection process either, because of the high pressure loss suffered by the flowing medium due to the long length of the conduit.

From the German "Offenlegungsschrift" 2.357.078 it is known to apply a layer of lubricant on the inner surface of a tube during its manufacture in view of lubricating the calibration core necessary to give the correct form of the tube. Such a lubricant layer has no other specific function than lubricating the production equipment.

It is furthermore known from British Patent 659.480 to lubricate the surface of a rubber tube during its production to allow correct vulcanisation.

In both documents the lubricant is applied to allow its manufacture and not to produce a tube with a lubricant layer.

The present invention propose a process and a device for applying a layer of lubricant with uniform thickness and uniformly distributed on the entire circumference of the inner surface of a pipe. This layer remains on the tube in view of the insertion of cables when the pipe is laid in the ground.

The present invention has furthermore for its object to propose an improved process and device for applying a layer of lubricant on the inner surface of plastic ducts with small diameter and on long ducts containing a plastic cord or band.

This object is achieved by a process and a device for applying a lubricant layer as defined in independent claims 1 and 5.

Further characteristics of the device and the process and preferred embodiments are described hereafter and included in the dependent claims.

The invention is explained below on the hand of descriptions of preferred embodiments, with reference to the drawings, where:

- fig. 1 shows a cross section of a first embodiment of the device according to the invention;
- fig. 2 shows a second embodiment of the device, in cross section;
- fig. 3a and 3b show a drip guide arrangement for dealing with excess lubricant;
- fig. 4 shows a device according to the invention mounted in an offset extrusion head;
- fig. 5 shows a variant of the device according to fig. 4, similar to that in fig. 2;
- fig. 6 shows the device according to the invention in a mandrel, in whose surface longitudinal grooves are machined;
- fig. 7 shows a variant of the embodiment according to fig. 6.

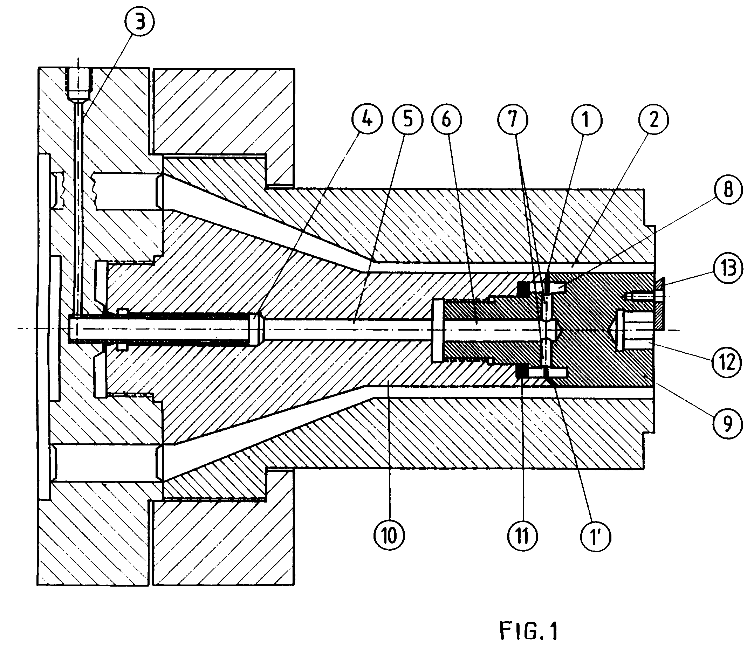

In fig. 1 an annular slit (chink, slot) 1,1' with very small width and fairly large depth is incorporated in the mandrel of the extruder-injection machine, through which the liquid lubricant is forced. The lubricant flows out of the annular slit, evenly distributed over the circumference of the mandrel radially or radially-axially, in a defined quantitity, and spreads as a thin layer with corresponding thickness under the plastic material as it flows forwards out of the annular slit 2 in the tool, so the plastic material as it were "swims" over the layer of lubricant. The lubricant is supplied at a rate of between 0 and 10 l/h, depending on the diameter of the cable duct and the extrusion rate, and is forced into annular chamber 8 via bore 3 (through the mandrel support), 4, 5, 6 and 7 by a dosing pump or forced delivery metering pump mounted beside the extruder. The cross section of said annular chamber 8 is several times greater than that of annular slit 1,1'. The annular slit is formed as follows: the front part of the two-part mandrel (i.e. the straight part 9 in fig. 1) is stepped, with a number of "shoulders". The first shoulder and the corresponding step in the rear or left-hand part 10 of the mandrel together form the left part of the annular chamber 8, and the right part of the annular chamber 8 is machined into the mandrel body 9 in the form of an annular groove. The second step forms a fit with the corresponding step of the rear part of the mandrel, which is made to the required tolerance. The third step forms a threaded shaft which screws into the corresponding female thread in the rear part of the mandrel. A very precisely made spacer ring 11 with its surface very finely finished sits as a washer on the second step and maintains the exact distance between the front and rear parts of the mandrel so as to form the annular slit 1,1', so that the width of the slit is exactly the same around its whole circumference. For this it is of course necessary for the seating surfaces for the spacer ring in the front and rear parts of the mandrel to be very precisely finished and finely machined, as must be the surfaces on either side of the annular slit. This is necessary to guarantee that the lubricant flows out of the annular slit evenly round the circumference, and then only provided that the pressure loss in the lubricant flowing through the annular slit is very great. This great pressure loss is achieved by giving the annular slit a suitable small width and large depth; both these dimensions depend on the viscosity of the lubricant and the rate at which it is supplied.

Exact alignment of the two parts of the mandrel is achieved by means of the second step, which forms a centering fit with the corresponding recess in the rear part of the mandrel. Finally, the third step, which forms the threaded shaft that screws into the corresponding thread in the rear part of the mandrel, serves to screw the two parts of the mandrel together. A hexagonal recess 12 serves to fit the hexagonal key used to screw the two parts of the mandrel together.

In the standard version the annular slit 1 is exactly radial; however a radial-axial orientation of the annular slit 1' in the flow direction of the plastic mass gives a better flow.

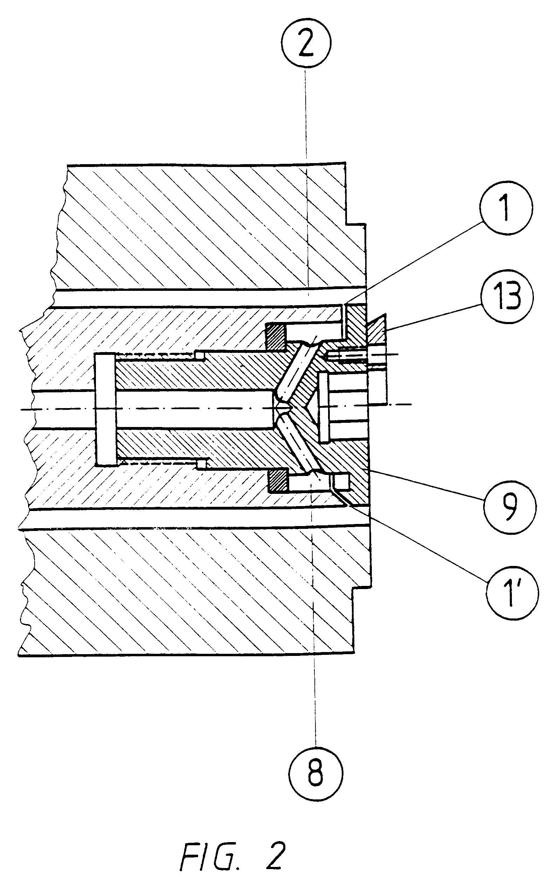

Fig. 2 shows an embodiment of the device according to the invention with the annular slit positioned just before the end of the extrusion tool. The purpose of this is as follows: the internal pressure of the plastic in the annular slit 2 decreases rapidly in the direction of flow, reaching atmospheric pressure at the end of the annular slit. The axial position of the annular slit must therefore be chosen so that the internal pressure at this point is roughly the same as the loss in pressure of the lubricant flowing out of the annular slit 1,1'. This is necessary to guarantee that the lubricant flows out of the annular slit evenly round the circumference. The corresponding axial position of the annular slit 1,1' must therefore be chosen according to the viscosity and flow rate of the lubricant.

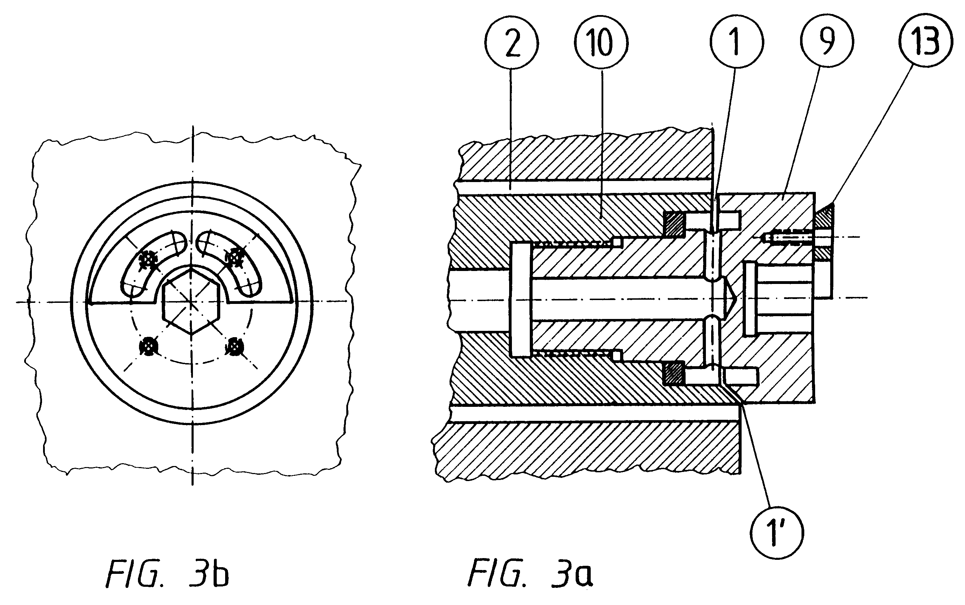

In this connection, fig. 3a shows an extreme variant of the second embodiment: the annular slit 1,1' is located practically at the opening of the annular slit 2 at the end of the mandrel. At this point, the extruded plastic is practically at ambient pressure. In order to form an equalisation zone for the tubular plastic mass coated inside with lubricant, the projecting front part 9 of the mandrel has an outer diameter slightly larger than that of the rear part. This serves to smooth out the inside surface of the cable duct.

In terms of flow characteristics, however, it has been found advantageous in principle to make the diameter $D_V$ of the front part 9 of the mandrel slightly smaller than the diameter $D_H$ of the rear part 10 of the mandrel; this applies to all the drawings shown here (figs. 1-7). If s is the width of the annular slit 1,1', then it is recommended to make $D_V$ e.g. 2s smaller than $D_H$, i.e. $D_V = D_H - 2s$ .

A profiled plate 13 (figs. 1-7) is screwed onto the front end of the front part of the mandrel, with side elevation as shown in fig. 3b. Its function is as follows: as the still soft plastic passes over it, some of the lubricant is continually skimmed off around the upper half circle of the edge of the front part of the mandrel, and runs down under the influence of gravity. In order to prevent the entire face of the mandrel becoming fouled, the profiled plate 13 acts as a gutter, and is configured and positioned so that the lubricant running down from above is intercepted and led to the side, where it runs off again tangentially to the inner surface of the cable duct.

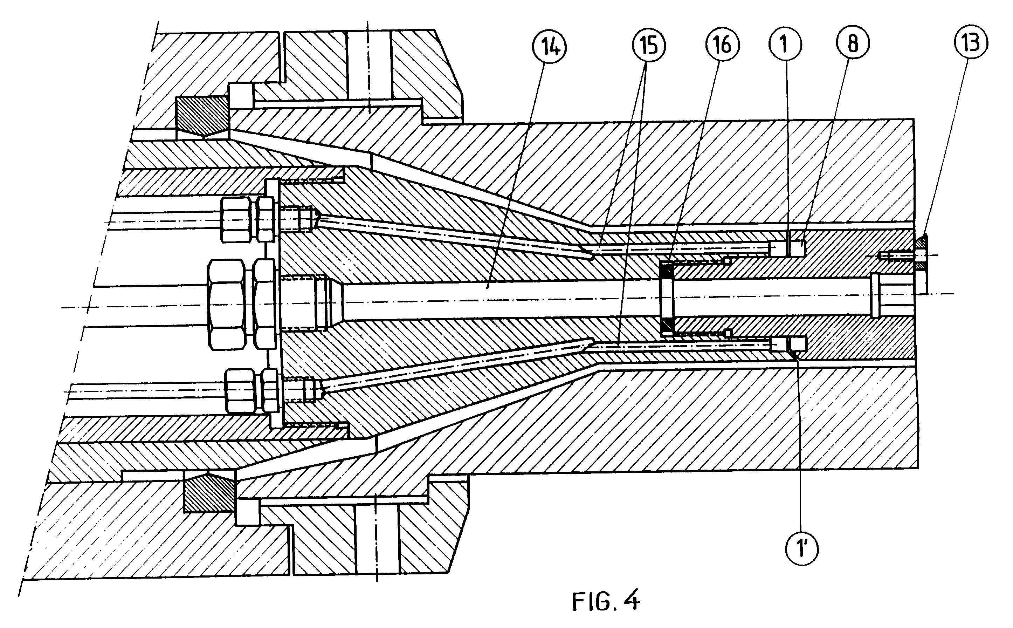

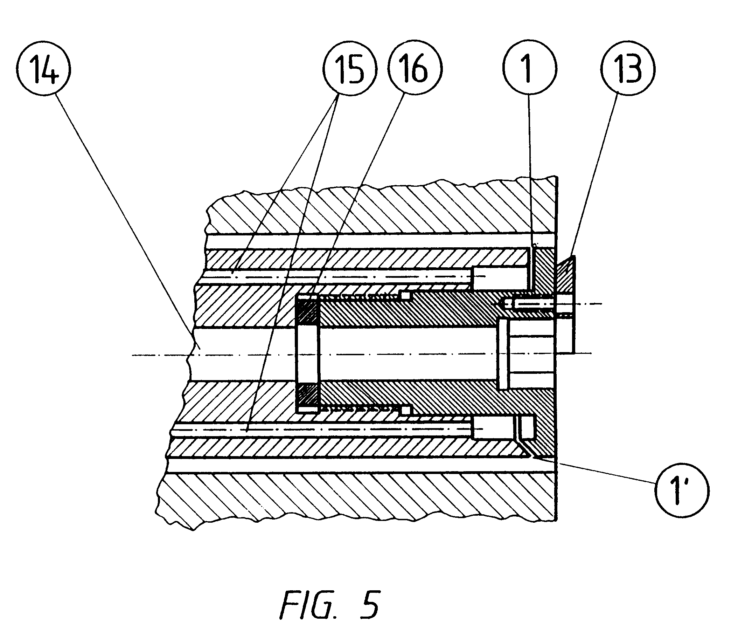

Fig. 4 shows the annular slit lubricating device being used in an offset extrusion head. The central bore 14 here serves to introduce a relatively thick tension element, e.g. a plastic cord. The annular channel 8 in this case has an eccentric bore 15 - or for greater flow rates, several eccentric bores - opening axially into the annular channel, and lubricant is supplied through said bore or bores from a metering pump. In contrast to the embodiment in fig. 1, the spacer ring 16 which defines the width of the annular slit is positioned at the front end of the female thread, i.e. the threaded shaft of the front part of the mandrel is screwed up against said spacer ring. All the bearing surfaces of and for said spacer ring are of course very precisely and finely finished in this case also. All the other structural and functional characteristics are identical to those of the embodiment in fig. 1. The same applies to the embodiment in fig. 5, except that the axial position of the annular slit is chosen differently, for the reasons explained above.

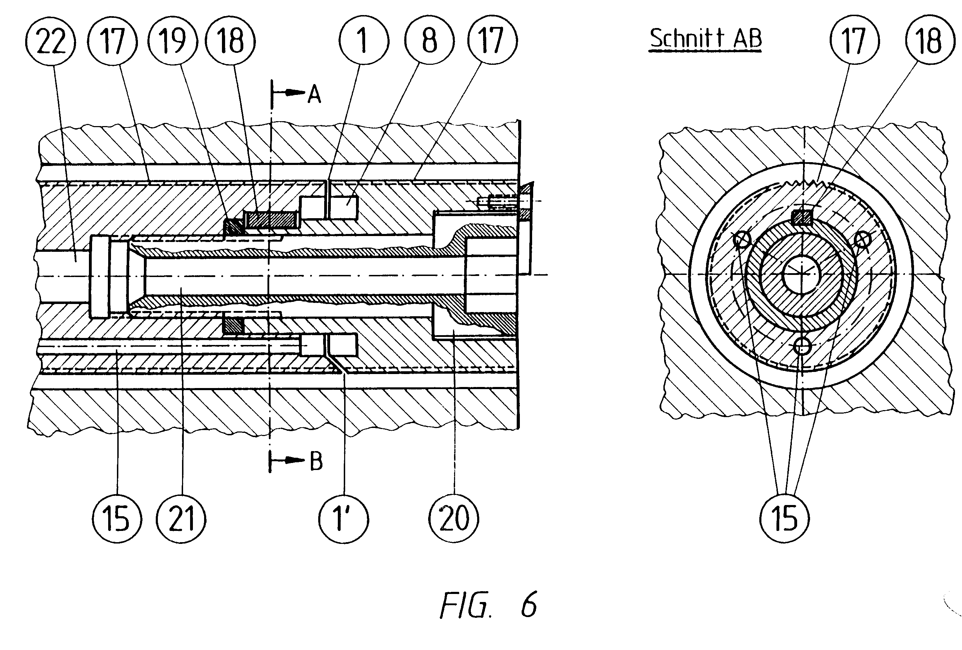

Fig. 6 shows a mandrel whose surface has a longitudinal groove or rifling 17, e.g. with a zig-zag cross section. The purpose of the profiling is to produce a fiber optic cable duct with a correspondingly profiled inner wall. Cable ducts with such a longitudinally grooved inner surface enable the cable to slide inside them more easily than in smooth-walled ducts, since the area of contact between the cable jacket and the duct wall is smaller. According to the present invention, lubrication of such a profiled inner surface is carried out as shown in fig. 6 for the offset injection head. The construction differs from that of the embodiments in figs. 3 and 4 as follows: the two parts of the mandrel, both of them longitudinally grooved, are kept in the exact circumferential position with respect to each other by means of a wedge 18 which sits in a locating groove, thus forming a non-twist lock, so that all the longitudinal grooves/riflings in the rear and front parts of the mandrel are exactly in line with each other.

This is necessary to guarantee that a clean, longitudinal profiling is obtained on the inner wall of the duct. The annular slit 1,1' is once again set by means of a spacer ring 19. Because of the necessity for wedge-and-groove non-twist locking, the front part of the mandrel must be screwed onto the rear part of the mandrel by means of a central attachment screw 20.

Said screw has a sufficiently large central bore 21 to enable the tension cord to be fed centrally into the duct through bore 22. In order to supply a sufficient amount of lubricant to the annual channel 8, there must be at least two eccentric bores 15 leading to it.

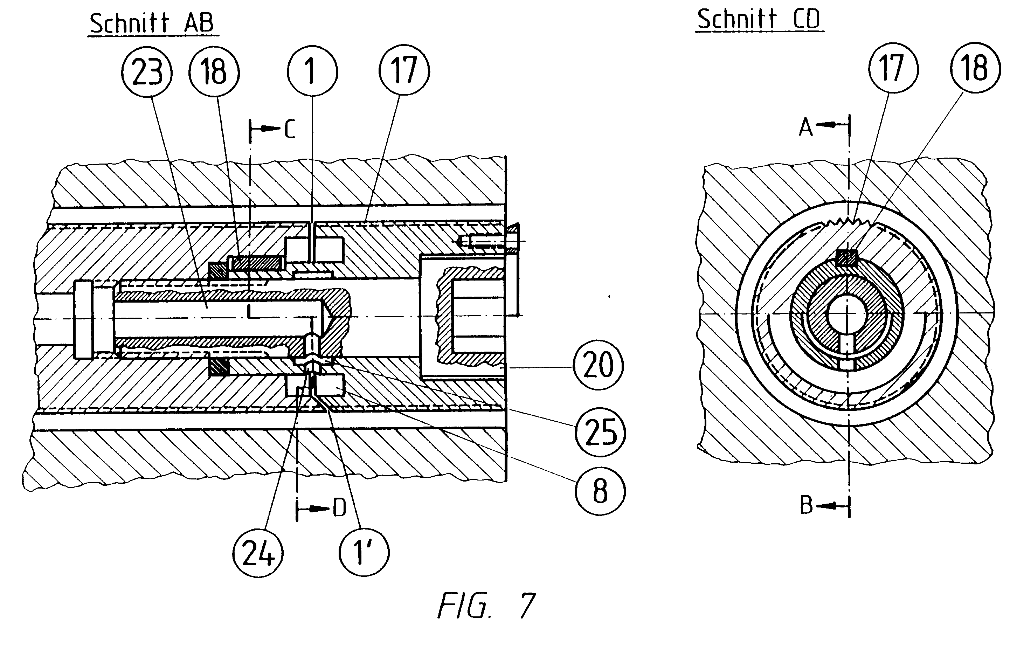

In the standard injection head with longitudinally grooved mandrel shown in fig. 7, the attachment screw 20 described above is also necessary, because of the required locating wedge 18. Since no cord is fed into the duct in the case of the standard injection head, the blind bore 23 in the attachment screw is used as a lubricant feed bore. The lubricant flows into the annular chamber 8 through the bore 24 which leads off the end of the blind bore 23 and an annular groove 25.

## Claims

1. Process for applying a layer of lubricant, distributed on the circumference of the inner surface of an extruded plastic pipe leaving the extrusion equipment, characterised in that the lubricating layer is applied under constant pressure near the exit of the extrusion equipment, through a substantially radial, annular slit (1, 1') connected to an annular chamber (8), located in the mandrel (9, 10) of the extrusion equipment, wherein the lubricant is maintained under constant hydrostatic pressure so as to obtain a layer of uniform and defined thickness of lubricant on the inner surface of the pipe.

2. Process according to claim 1, characterised in that the lubricant is applied under an oblique angle to the inner surface of the plastic pipe.

3. Process according to claim 1 or 2, characterised in that the position of the annular slit (1, 1') on the mandrel (9, 10), and the delivery pressure of the lubricant, are chosen such that the internal pressure of the plastic material equals approximately the pressure of the lubricant at the exit from the annular slit (1, 1').

4. Process according to any of claims 1 to 3, characterised in that the lubricant is pressed with a large pressure drop through a correspondingly narrow and substantially radial extending annular slit.(1,1').

5. Device for applying a layer of lubricant on the inner surface of an extruded plastic pipe manufactured by means of a mandrel (9, 10) of an extruder, characterised by a substantially radial annular slit (1, 1') in the outer surface near the exit of the mandrel (9, 10), connected to a dosing pump via a lubricant supply channel (4-7) inside the mandrel (9, 10).

6. Device according to claim 5, characterised in that the dept and width of the annular slit (1, 1') is chosen according to the viscosity of the lubricant, so that there is a large pressure drop of the flowing lubricant between its entering and leaving the annular slit (1, 1').

7. Device according to claim 5 or 6, characterised in that between the annular slit (1, 1') and its lubricant supply channel (4-7) there is an annular chamber (8) whose width is substantially greater than the width of the annular slit (1, 1').

8. Device according to any of claims 5 to 7, characterised in that the annular slit (1') slants in the direction of flow of the plastic material of the extruded pipe.

9. Device according to any of claims 5 to 8, characterised in that the part (9) of the mandrel (9, 10) downstream of the annular slit (1, 1') has a slightly smaller diameter than the part (10) of the mandrel (9, 10) upstream of the annular slit (1, 1'), in order to allow the building up of a layer of uniform and defined thickness to be applied on the inner surface of the plastic pipe.

10. Device according to any of claims 5 to 9, characterised in that the annular slit (1, 1') is located near the end of the mandrel (9, 10) of the extrusion device in the direction of flow of the extruded plastic pipe.

11. Device according to any of claims 5 to 10, characterised in that the extrusion device has an offset extrusion head with a central bore (14), and the annular chamber (8) which communicates with the annular slit (1, 1') is fed via one or more eccentric lubricant feed channels (15) running axially through the mandrel (9, 10).

12. Device according to any of claims 5 to 11, characterised in that, mounted on the upper half of the front end of the mandrel (9, 10), there are lubricant guide devices in the shape of a profiled plate (13) by means of which the lubricant which drips down is applied tangentially to the inner surface of the plastic pipe.

**Patentansprüche**

1. Verfahren zum Auftragen einer Gleitmittelschicht, welche auf den Umfang der Innenfläche eines die Extrudervorrichtung verlassenden extrudierten Kunststoffrohrs verteilt wird, **dadurch gekennzeichnet,** daß die Gleitmittelschicht unter konstantem Druck nahe dem Ausgang der Extrudervorrichtung durch einen mit einer ringförmigen Kammer (8) verbundenen im wesentlichen radialen, ringförmigen Spalt (1, 1') aufgetragen wird, welche Kammer (8) in dem Dorn (9, 10) der Extrudervorrichtung angeordnet ist, wobei das Gleitmittel unter konstantem hydrostatischem Druck gehalten wird, um auf der Innenfläche des Rohrs eine Gleitmittelschicht von einheitlicher und definierter Dicke zu erhalten.

2. Verfahren nach Anspruch 1, **dadurch gekennzeichnet,** daß das Gleitmittel unter einem schiefen Winkel auf die Innenfläche des Kunststoffrohrs aufgetragen wird.

3. Verfahren nach Anspruch 1 oder 2, **dadurch gekennzeichnet,** daß die Lage des ringförmigen Spaltes (1, 1') an dem Dorn (9, 10) und der Abgabedruck des Gleitmittels derart gewählt werden, daß der Innendruck des Kunststoffmaterials etwa gleich dem Gleitmitteldruck an dem Ausgang von dem ringförmigen Spalt (1, 1') ist.

4. Verfahren nach einem der Ansprüche 1 bis 3, **dadurch gekennzeichnet,** daß das Gleitmittel mit einem großen Druckabfall durch einen entsprechend schmalen und im wesentlichen sich radial erstreckenden ringförmigen Spalt (1, 1') gedrückt wird.

5. Vorrichtung zum Auftragen einer Gleitmittelschicht auf die Innenfläche eines extrudierten Kunststoffrohrs, welches mittels eines Dorns (9, 10) eines Extruders hergestellt ist, gekennzeichnet durch einen im wesentlichen radialen ringförmigen Spalt (1, 1') in der Außenfläche nahe des Ausgangs des Dorns (9, 10), welcher Spalt (1, 1') über einen Gleitmittelzufuhrkanal (4 - 7) in dem Dorn (9, 10) mit einer Dosierpumpe verbunden ist.

6. Vorrichtung nach Anspruch 5, **dadurch gekennzeichnet,** daß die Tiefe und Breite des ringförmigen Spalts (1, 1') gemäß der Viskosität des Gleitmittels ausgewählt werden, so daß ein großer Druckabfall des strömenden Gleitmittels zwischen seinem Eintreten und Verlassen des ringförmigen Spalts (1, 1') vorhanden ist.

7. Vorrichtung nach Anspruch 5 oder 6, **dadurch gekennzeichnet,** daß sich zwischen dem ringförmigen Spalt (1, 1') und seinem Gleitmittelzufuhrkanal (4 - 7) eine ringförmige Kammer (8) befindet, deren Breite wesentlich größer als die Breite des ringförmigen Spalts (1, 1') ist.

8. Vorrichtung nach einem der Ansprüche 5 bis 7, **dadurch gekennzeichnet,** daß sich der ringförmige Spalt (1') in Strömungsrichtung des Kunststoffmaterials des extrudierten Rohrs neigt.

9. Vorrichtung nach einem der Ansprüche 5 bis 8, **dadurch gekennzeichnet,** daß der Teil (9) des Dorns (9, 10) stromabwärts von dem ringförmigen Spalt (1, 1') einen etwas kleineren Durchmesser aufweist als der Teil (10) des Dorns (9, 10) stromaufwärts von dem ringförmigen Spalt (1, 1'), um die Bildung einer auf die Innenfläche des Kunststoffrohrs aufzutragenden Schicht von einheitlicher und definierter Dicke zu erlauben.

10. Vorrichtung nach einem der Ansprüche 5 bis 9, **dadurch gekennzeichnet,** daß sich der ringförmige Spalt (1, 1') in Strömungsrichtung des extrudierten Kunststoffrohrs nahe dem Ende des Dorns (9, 10) der Extrudervorrichtung befindet.

11. Vorrichtung nach einem der Ansprüche 5 bis 10, **dadurch gekennzeichnet,** daß die Extrudervorrichtung einen versetzten Extruderkopf mit einer zentralen Bohrung (14) aufweist und die ringförmige Kammer (8), die mit dem ringförmigen Spalt (1, 1') in Verbindung steht, über einen oder mehrere exzentrische Gleitmittelspeisekanäle (15), welche axial durch den Dorn (9, 10) laufen, gespeist wird.

12. Vorrichtung nach einem der Ansprüche 5 bis 11, **dadurch gekennzeichnet,** daß an der oberen Hälfte des Vorderendes des Dorns (9, 10) Gleitmittelführungsvorrichtungen in Form einer profilierten Scheibe (13) angebracht sind, mittels welcher herabtropfendes Gleitmittel tangential auf die Innenfläche des Kunststoffrohrs aufgetragen wird.

**Revendications**

1. Procédé pour l'application d'une couche de lubrifiant distribuée sur la circonférence de la surface intérieure d'un tube extrudé en matière plastique à sa sortie de l'équipement d'extrusion, caractérisé en ce que la couche lubrifiante est appliquée sous pression constante à proximité de la sortie de l'équipement d'extrusion, par une fente annulaire (1, 1'), qui s'étend en substance radialement, reliée à une chambre annulaire (8), située dans le noyau du mandrin (9, 10) de l'équipement d'extrusion, dans laquelle le lubrifiant est maintenu sous une pression hydrostatique constante de manière à obtenir une couche de lubrifiant d'une épaisseur donnée et uniforme sur la surface intérieure du tuyau.

2. Procédé selon la revendication 1, caractérisé en ce que l'application du lubrifiant sur la surface intérieure du tuyau en matière plastique est réalisée sous un angle oblique.

3. Procédé selon la revendication 1 ou 2, caractérisé en ce que la position de la fente annulaire (1, 1') dans le noyau du mandrin (9, 10) et la pression de refoulement du lubrifiant sont choisies de sorte que la pression à l'intérieur de la matière plastique soit approximativement égale à la pression du lubrifiant à la sortie de la fente annulaire (1, 1').

4. Procédé selon l'une quelconque des revendications 1 à 3, caractérisé en ce que le lubrifiant est poussé à travers une fente annulaire étroite qui s'étend en substance radialement (1, 1'), provoquant une chute de pression importante.

5. Dispositif pour l'application d'une couche de lubrifiant sur la surface intérieure d'un tuyau extrudé en matière plastique fabriqué au moyen d'un madrin (9, 10) d'une extrudeuse, caractérisé par une fente annulaire en substance radiale (1, 1') située sur la surface extérieure, à proximité de la sortie du noyau du mandrin (9, 10) et reliée à une pompe de dosage par un canal d'alimentation en lubrifiant (4-7) à l'intérieur du noyau du mandrin (9, 10).

6. Dispositif selon la revendication 5, caractérisé en ce que la profondeur et la largeur de la fente annulaire (1, 1') sont choisies en fonction de la viscosité du lubrifiant de sorte que le flux de lubrifiant subit une importante chute de pression entre le moment où il pénètre dans la fente annulaire (1, 1') et celui où il en sort.

7. Dispositif selon la revendication 5 ou 6, caractérisé en ce qu'il est prévu, entre la fente annulaire (1, 1') et son canal d'alimentation en lubrifiant (4-7), une chambre annulaire (8) dont la largeur est sensiblement plus grande que celle de la fente annulaire (1, 1').

8. Dispositif selon l'une quelconque des revendications 5 à 7, caractérisé en ce que la fente annulaire (1') est inclinée dans la direction du flux de matière plastique du tuyau extrudé.

9. Dispositif selon l'une quelconque des revendications 5 à 8, caractérisé en ce que la partie (9) du noyau du mandrin (9, 10) en aval de la fente annulaire (1, 1') possède un diamètre légèrement inférieur à celui de la partie (10) du noyau du mandrin (9, 10) en amont de la fente annulaire (1, 1') afin de permettre la formation d'une couche d'épaisseur donnée et uniforme sur la surface intérieure du tuyau en matière plastique.

10. Dispositif selon l'une quelconque des revendications 5 à 9, caractérisé en ce que la fente annulaire (1, 1') est située à proximité de l'extrémité postérieure du noyau du mandrin (9, 10) du dispositif d'extrusion, dans le sens de déplacement du tuyau extrudé en matière plastique.

11. Dispositif selon l'une quelconque des revendications 5 à 10, caractérisé en ce que le dispositif d'extrusion comprend une tête d'extrusion latérale à alésage central (14) et en ce que la chambre annulaire (8) communiquant avec la fente annulaire (1, 1') est alimentée par un ou plusieurs canaux excentriques d'alimentation en lubrifiant (15) qui s'étendent axialement dans le noyau du mandrin (9, 10).

12. Dispositif selon l'une quelconque des revendications 5 à 11, caractérisé en ce que sont montés, sur la moitié supérieure de l'extrémité frontale du noyau du mandrin (9, 10), des dispositifs de guidage du lubrifiant qui se présentent sous la forme d'une plaque profilée (13) et au moyen desquels le lubrifiant qui s'égoutte, est appliqué tangentiellement sur la surface intérieure du tuyau en matière plastique.

FIG. 1

FIG. 2

FIG. 3a

FIG. 3b

FIG. 4

FIG. 5

EP 0 547 017 B1

Schnitt AB

FIG. 6

EP 0 547 017 B1

Schnitt AB

Schnitt CD

FIG. 7

EP 0 547 017 B1